# EUROPEAN PATENT APPLICATION

(11) **EP 4 550 223 A1**
(43) Date of publication of application: **07.05.2025**
(21) Application number: 22949400.0
(22) Date of filing: 30.06.2022
(51) Int. Cl.: G06N 20/00

(54) **INFORMATION PROCESSING SYSTEM**

(71) Applicant: Marketvision Co.,Ltd., Tokyo 102-0075 (JP)
(72) Inventor: SHIN Dongjoo, Tokyo 102-0075 (JP)
(74) Representative: Betten & Resch
(86) International application number: PCT/JP2022/026195
(87) International publication number: WO 2024/004127

(57) **Abstract**

An object is to provide an information processing system that automatically performs cleansing of annotation data necessary for performing learning of deep learning.

An information processing system that executes cleansing processing of a data set that is a set of annotation data including classification target data and a class corresponding to the classification target data includes a learning processing unit that generates a model by executing learning processing of deep learning using the data set, and a cleansing processing unit that executes cleansing processing of annotation data in the data set, in which the cleansing processing unit executes the cleansing processing of first annotation data in a first data set by outputting a first class corresponding to classification target data in the first annotation data in the first data set and a second class by inputting the classification target data to a first model generated by the learning processing unit using the first data set, and comparing the first class with the second class.

## Description

### Technical Field

The present invention relates to an information processing system that automatically performs cleansing of annotation data necessary for performing learning of deep learning.

### Background Art

In recent years, a data processing method called deep learning has been used in various applications. For example, it is used for determining a type of an object appearing in image data, and as an example, it is used for identifying goods displayed on a display shelf appearing in image data by inputting image data obtained by capturing a display shelf of a store into a model by deep learning (learned model or learned network). Other than this, it is used in various applications.

Since deep learning can classify various data, attention has been increased in recent years.

On the other hand, when deep learning is used, it is necessary to learn a model in advance using annotation data. The annotation data is data indicating which class (type) a certain piece of data is classified into. For example, in image data of "dog", it is necessary to indicate that the class of the image data is "dog". Such association of a certain data with the class of the data is called annotation.

In deep learning, a model is learned by executing predetermined learning processing using a large number of pieces of annotation data. At this time, if learning is performed using annotation data with high annotation accuracy, the accuracy of the model also increases. That is, the accuracy of data classification by deep learning depends on the quality of annotation.

Accordingly, highly accurate annotation data is required. While there are a case where the annotation is manually generated and a case where the annotation is generated from data left in the system, in both cases, some erroneous determination or fluctuation is included as a result, and it is often necessary to perform confirmation and correction by a person in order to improve accuracy. An operation of correcting an annotation error in annotation data or deleting erroneous data is called cleansing.

In deep learning, classification is possible even when the number of classes is several thousand or more, but in a case where the number of classes is large in this manner, it is necessary for a person having abundant knowledge to work in order to manually perform cleansing. However, in that case, since the working time becomes long and an error occurs due to a decrease in attention, it takes a large cost to obtain highly accurate annotation data. In addition, there is a limit in accuracy.

Accordingly, it is required to automatically perform cleansing without manual operation. Such an example is disclosed in Patent Literature 1 below.

### Citation List

### Patent Literature

Patent Literature 1: JP 2021-157497 A

### Summary of Invention

### Technical Problem

Patent Literature 1 discloses a method of automatically cleansing annotation data in deep learning. Specifically, processing of dividing an image set, over-learning a convoutional neural network (CNN) by using a part of the divided image set, and deleting and re-classifying (re-annotation) an image by using the over-learned CNN as an image classification result is repeated until a predetermined acceptance criterion is satisfied.

However, it is known that the accuracy of data classification decreases when over-learning is performed, and a configuration indicating a reason why the accuracy of data classification is improved in a general case by the method disclosed in Patent Literature 1 is not disclosed. It is also unclear whether the accuracy of data classification is actually improved. Further, since processing such as over-learning and reclassification (re-annotation) is repeated, the processing becomes complicated, and the processing time and the processing load increase.

### Solution to Problem

In view of the above problems, the present inventor has invented an information processing system that automatically cleanses annotation data in deep learning by a simpler method.

A first invention is an information processing system that executes cleansing processing of annotation data in a data set that is a set of annotation data including classification target data and a class corresponding to the classification target data, the information processing system including a learning processing unit that generates a model by executing learning processing of deep learning using the data set, and a cleansing processing unit that executes cleansing processing of annotation data in the data set, in which the cleansing processing unit executes the cleansing processing of first annotation data in a first data set by outputting a first class corresponding to classification target data in the first annotation data in the first data set and a second class by inputting the classification target data to a first model generated by the learning processing unit using the first data set, and comparing the first class with the second class.

By configuring as in the present invention, it is possible to execute cleansing processing of the annotation data in deep learning by a simpler method than the conventional technique as described in Patent Literature 1. Note that the cleansing processing in the information processing system of the present invention refers to processing of excluding erroneous annotation data from the data set (exclusion type cleansing processing).

In the above-described invention, the information processing system can be configured as an information processing system in which the cleansing processing unit outputs a first class corresponding to the classification target data in the first annotation data in the first data set and a second class by inputting the classification target data to a first model generated by the learning processing unit using the first data set, excludes the first annotation data from the first data set when the first class and the second class are compared and a predetermined condition is not satisfied, and outputs a second data set using annotation data that has not been excluded among the first annotation data in the first data set.

The cleansing processing of the annotation data can be performed as in the present invention.

In the above-described invention, the information processing system can be configured as an information processing system in which the learning processing unit generates a second model using a data set of a set of annotation data on which the cleansing processing has been executed.

The model used for deep learning is preferably generated as in these inventions.

In the above-described invention, the information processing system can be configured as an information processing system including an operation processing unit that executes deep learning processing by inputting analysis target data as a processing target to the second model.

In the model of the present invention, since the cleansing processing is executed on the annotation data, learning is performed with highly accurate annotation data, and the accuracy of deep learning is also increased.

In the above-described invention, the information processing system can be configured as an information processing system including an initial annotation processing unit that executes predetermined classification processing on the classification target data, outputs the first class corresponding to the classification target data, and outputs the first data set that is a set of first annotation data in which the classification target data and the first class are associated with each other.

The data set that is a set of the first annotation data can be output by various methods, but may be automatically output as in the present invention.

In the above-described invention, the information processing system can be configured as an information processing system in which the classification processing in the initial annotation data processing unit and the classification processing in the cleansing processing unit are different classification processing.

For example, different classification processing is preferably used like, for example, classification processing using a local feature amount as the first classification processing for outputting the data set of the first annotation data, and classification processing of deep learning as the second classification processing for outputting the data set of the second annotation data. This can improve the accuracy of the data set output by the cleansing processing.

In the above-described invention, the classification target data can be configured as an information processing system in which the classification target data is data obtained by cutting out a part of original data.

When a plurality of objects is included in the original data, processing is preferably executed using data obtained by cutting out a part of the original data as classification target data as in the present invention.

An eighth invention is an information processing system that executes cleansing processing of annotation data in a data set that is a set of annotation data including image data of goods and goods identification information, the information processing system including a learning processing unit that generates a model by executing learning processing of deep learning using the data set, and a cleansing processing unit that executes cleansing processing of annotation data in the data set, in which the cleansing processing unit executes the cleansing processing of first annotation data in a first data set by outputting first goods identification information corresponding to image data of goods in the first annotation data in the first data set and second goods identification information by inputting the image data of the goods to a first model generated by the learning processing unit using the first data set, and comparing the first goods identification information with the second goods identification information, and the learning processing unit generates a second model by using a data set of a set of annotation data on which the cleansing processing has been executed.

As in the present invention, the information processing system of the first invention is preferably used for cleansing processing of annotation data for learning a model used for deep learning processing for identifying goods identification information of goods appearing in image data. This is because, in the case of the processing of identifying the goods identification information from the goods appearing in the image data as in the present invention, there are many similar goods, and thus the accuracy of identification is required.

In the above-described invention, the information processing system can be configured as an information processing system including an operation processing unit that executes deep learning processing by inputting image data of goods displayed on a display shelf from image data obtained by capturing the display shelf to the second model and identifies goods identification information of the goods.

The information processing system of the first invention can be implemented by causing a computer to read and execute a program of the present invention. That is, the program is an information processing program for causing a computer to function as a learning processing unit that executes learning processing of deep learning using a data set that is a set of annotation data including classification target data and a class corresponding to the classification target data to generate a model, and a cleansing processing unit that executes cleansing processing of annotation data in the data set, in which the cleansing processing unit executes the cleansing processing of first annotation data in a first data set by outputting a first class corresponding to classification target data in the first annotation data in the first data set and a second class by inputting the classification target data to a first model generated by the learning processing unit using the first data set, and comparing the first class with the second class.

The information processing system of the eighth invention can be implemented by causing a computer to read and execute a program of the present invention. That is, the program is an information processing program for causing a computer to function as a learning processing unit that executes learning processing of deep learning using a data set that is a set of annotation data including image data of goods and goods identification information to generate a model, and a cleansing processing unit that executes cleansing processing of annotation data in the data set, in which the cleansing processing unit executes the cleansing processing of first annotation data in a first data set by outputting first goods identification information corresponding to image data of goods in the first annotation data in the first data set and second goods identification information by inputting the image data of the goods to a first model generated by the learning processing unit using the first data set, and comparing the first goods identification information with the second goods identification information, and the learning processing unit generates a second model by using a data set of a set of annotation data on which the cleansing processing has been executed.

### Advantageous Effects of Invention

By using the information processing system of the present invention, annotation data in deep learning can be automatically cleansed by a simpler method.

### Brief Description of Drawings

Fig. 1 is a block diagram schematically illustrating an example of a configuration of an information processing system of the present invention.
Fig. 2 is a block diagram schematically illustrating an example of a hardware configuration of a computer used in the information processing system of the present invention.
Fig. 3 is a conceptual diagram schematically illustrating an example of entire processing in the information processing system of the present invention.
Fig. 4 is a conceptual diagram illustrating a flow of use of data in entire processing in the information processing system of the present invention.
Fig. 5 is a flowchart illustrating an example of an entire processing process in the information processing system of the present invention.
Fig. 6 is a flowchart illustrating an example of a processing process of initial annotation data processing in the information processing system of the present invention.
Fig. 7 is a flowchart illustrating an example of a processing process of cleansing processing in the information processing system of the present invention.
Fig. 8 is a block diagram schematically illustrating an example of a configuration of an information processing system of a second embodiment.
Fig. 9 is a conceptual diagram schematically illustrating an example of entire processing in the information processing system of the second embodiment.
Fig. 10 is a conceptual diagram illustrating a flow of use of data in entire processing in the information processing system of the second embodiment.
Fig. 11 is a flowchart illustrating an example of a processing process of initial annotation data processing in the information processing system of the second embodiment.
Fig. 12 is a conceptual diagram schematically illustrating an example of entire processing in an information processing system of a third embodiment.
Fig. 13 is a diagram illustrating an example of captured image data in the third embodiment.
Fig. 14 is a diagram illustrating an example of a state in which a face region is specified and cut out in a region of each shelf specified from the captured image data of Fig. 13.

### Description of Embodiments

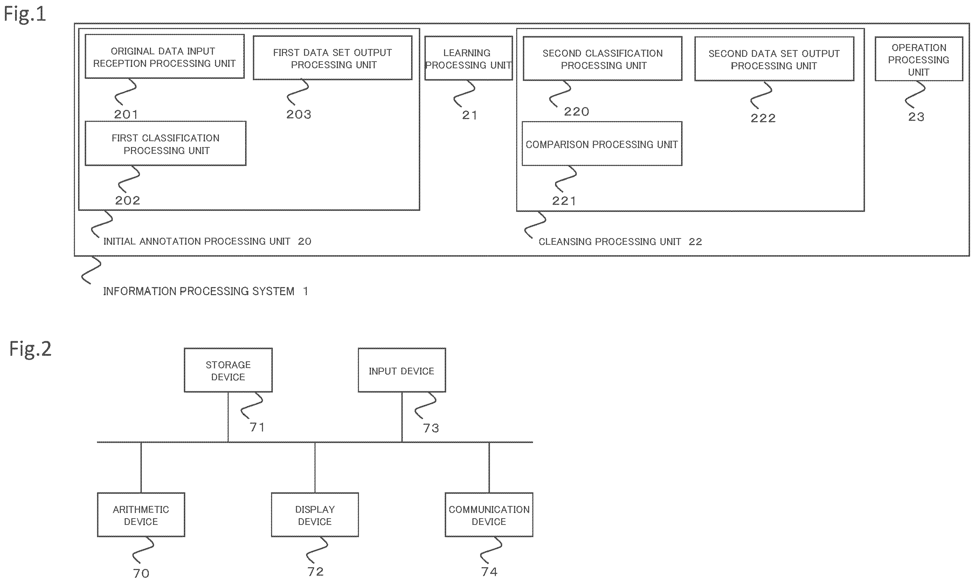

Fig. 1 is a block diagram illustrating an example of a configuration of an information processing system 1 of the present invention. The information processing system 1 is implemented by using a computer used by an organization such as a company that operates the information processing system 1, a computer of another third party, or the like.

An example of a hardware configuration of a computer used in the information processing system 1 will be schematically illustrated. The computer includes an arithmetic device 70 such as a CPU that executes arithmetic processing of a program, a storage device 71 such as a RAM or a hard disk that stores information, a display device 72 such as a display that displays information, an input device 73 such as a keyboard or a mouse that can input information, and a communication device 74 that transmits and receives a processing result of the arithmetic device 70 and information stored in the storage device 71 via a network such as the Internet or a LAN.

In a case where the computer includes a touch panel display, the display device 72 and the input device 73 may be integrally configured. The touch panel display is often used in, for example, a portable communication terminal such as a tablet computer or a smartphone, but is not limited thereto.

The touch panel display is a device in which the functions of the display device 72 and the input device 73 are integrated in that an input can be directly performed by a predetermined input device (such as a pen for a touch panel), a finger, or the like on the display.

The functions of the respective means in the present invention are only logically distinguished, and the respective means may physically or practically form the same region. In the processing in each unit of the present invention, the processing order can be appropriately changed. Further, a part of the processing may be omitted. In addition, all or some of the functions of the information processing system 1 may be implemented by cloud computing.

The information processing system 1 includes an initial annotation processing unit 20, a learning processing unit 21, a cleansing processing unit 22, and an operation processing unit 23.

The initial annotation processing unit 20 includes an original data input reception processing unit 201, a first classification processing unit 202, and a first data set output processing unit 203, and generates and outputs a data set DS0 of initial annotation data (initial annotation data) by using the original data whose input has been received. The annotation data is data in which data to be classified (classification target data) and a class are associated with each other. In the following description, a case where the classification target data is image data will be described, but the classification target data may be any data that is a classification target in deep learning, such as sound data, text data, and biometric information data (data caused by a human body such as a fingerprint, a voiceprint, an iris, and a vein). In addition, the description of the image only needs to be replaced with sound, text, biometric information, and the like below.

The original data input reception processing unit 201 receives an input of image data (original data) that is a source of the initial annotation data. As the original data for receiving the input, a sufficient number of pieces of data, for example, ten or more pieces of data may be used for obtaining the annotation data, but the input may be received by several hundred or several thousand. As the annotation data of a data set DS1 to be output by executing the cleansing processing by the cleansing processing unit 22 to be described later, it is sufficient that the number of data sufficient to generate the model 1 can be ensured.

The first classification processing unit 202 executes predetermined classification processing, for example, image classification processing, on the classification target data, for example, each piece of original data whose input has been received by the original data input reception processing unit 201 or a part of the original data, thereby executing processing of associating the class C0 with the classification target data. Which class the classification target data is can be determined by executing predetermined classification processing, for example, any processing such as classification processing using local feature amounts and classification processing using deep learning. In a case where a plurality of classes is output in descending order of reliability as the classification processing in the first classification processing unit 202, it is preferable to set the class having the highest reliability as the class C0 for the classification target data, but a plurality of classes may be set as the class C0. In this case, a class within a range from a class having the highest reliability to a predetermined number or a predetermined reliability may be set as the class C0. In this case, a plurality of classes is associated as the class C0 for the classification target data. The classification processing in the first classification processing unit 202 is preferably different from the classification processing in a second classification processing unit 220 described later. For example, as a result of the image classification processing in the first classification processing unit 202 using the classification target data (original data in which "dog" appears) as an input value, the class "dog" is determined and output.

The first data set output processing unit 203 associates the classification target data input to the first classification processing unit 202 as an input value with the class C0 output by the classification processing, and sets the associated data as initial annotation data. Then, a set of initial annotation data including each classification target data and the class C0 corresponding thereto is output as the data set DS0.

The learning processing unit 21 executes learning processing by deep learning using a data set that is a set of annotation data, and generates a model. For example, the learning processing is executed using the data set DS0 output by the initial annotation processing unit 20 to generate the model 0. Further, as described later, the learning processing is executed using the data set DS1 output by the cleansing processing unit 22 to generate the model 1. The learning processing is similar to known learning processing in deep learning, and the learning processing can be executed by associating image data in a data set with a class and inputting the image data and the class as correct answer data.

Note that, since it is sufficient if the learning processing unit 21 executes known learning processing in deep learning, the learning processing unit classifies the annotation data in the data set into learning data and test data used for the learning processing at a predetermined ratio, and executes the learning processing. The ratio at this time may be any ratio. For example, a model is generated by known learning processing using learning data, and test data is input to the model. Then, the learning processing is executed on the output result of the test data until a predetermined reliability is ensured.

The cleansing processing unit 22 includes a second classification processing unit 220, a comparison processing unit 221, and a second data set output processing unit 222, excludes annotation data satisfying a predetermined condition from the data set DS0 out of the annotation data in the data set DS0 output by the initial annotation processing unit 20, and outputs a set of remaining annotation data as the data set DS1.

The second classification processing unit 220 inputs the classification target data in the data set DS0 as an input value to the model 0 generated by the learning processing unit 21 learning using the data set DS0 of the initial annotation data, executes processing by deep learning, and outputs a class C1 for the classification target data as an output value. This processing is preferably executed on the learning data classified by the learning processing unit 21 in the data set DS0, but classification target data classified as test data in the data set DS0 may also be input to the model 0 as an input value, processing by deep learning may be executed, and the class C1 for the classification target data may be output as an output value. In a case where a plurality of classes is output in descending order of reliability as the classification processing in the second classification processing unit 220, it is preferable that the class having the highest reliability be the class C1 for the classification target data, but a plurality of classes may be the class C1. In this case, a class within a range of a predetermined number or a predetermined reliability from a class having the highest reliability may be set as the class C1. In this case, a plurality of classes is associated as the class C1 for the classification target data.

The comparison processing unit 221 compares the class C0 corresponding to the classification target data in the data set DS0 with the class C1 of an output result of the second classification processing unit 220 for the classification target data, and determines whether a predetermined condition is satisfied. That is, the class C0 of the classification processing by the first classification processing unit 202 and the class C1 of the classification processing by the second classification processing unit 220 attached to the same classification target data are compared with each other, and it is determined whether a predetermined condition, for example, matching is satisfied. Then, unmatched annotation data is excluded from the data set DS0. In addition, in a case where a plurality of classes is included in the class C1 of the classification processing by the second classification processing unit 220, in a case where the class of the class C0 of the classification processing by the first classification processing unit 202 is included in any of the classes of the class C1, it may be determined as matching annotation data. Note that, as the predetermined condition, in addition to the case where the class C0 and the class C1 match as described above, whether the reliability of each of the class C0 by the first classification processing unit 202 and the class C1 by the second classification processing unit 220 exceeds a predetermined threshold, respective reliabilities with an output result of the second class are separated by a predetermined value or more, or the like is added as a condition, and in a case where the added condition is satisfied, it may be determined that the annotation data matches.

In a case where the classification target data classified as the test data is also input to the model 0 in the second classification processing unit 220, and the class C0 and the class C1 do not match, the comparison processing unit 221 may exclude the annotation data that does not match from the data set DS0, or may not exclude the mismatch of the annotation data classified as the test data from the data set DS0.

The second data set output processing unit 222 outputs the data set DS1 as a set of annotation data other than the annotation data excluded by the comparison processing unit 221 among the annotation data of the data set DS0.

The operation processing unit 23 inputs data (processing target data) as an actual processing target to the model 1 generated by learning using the data set DS1 as an input value, executes processing by deep learning, and outputs a class C2 for the processing target data as an output value. Note that, at this time, the reliability of the class C2 may be output. Note that the processing in the operation processing unit 23 may be processing of image classification by known deep learning using the model 1.

Note that, in the present specification, as the classification processing by deep learning, classification target data or processing target data as an input value is input to a model (model 0 or model 1) in which a weighting coefficient between neurons of each layer of a neural network in which an intermediate layer includes a large number of layers is optimized, and a class (class C1 or class C2) of the output value is output.

In addition, instead of automatically performing the annotation on the classification target data in the initial annotation processing unit 20 and outputting the data set DS0, for example, a predetermined operator may manually perform the annotation on each classification target data and output the data set DS0. In this case, the initial annotation processing unit 20 need not be provided.

### [First embodiment]

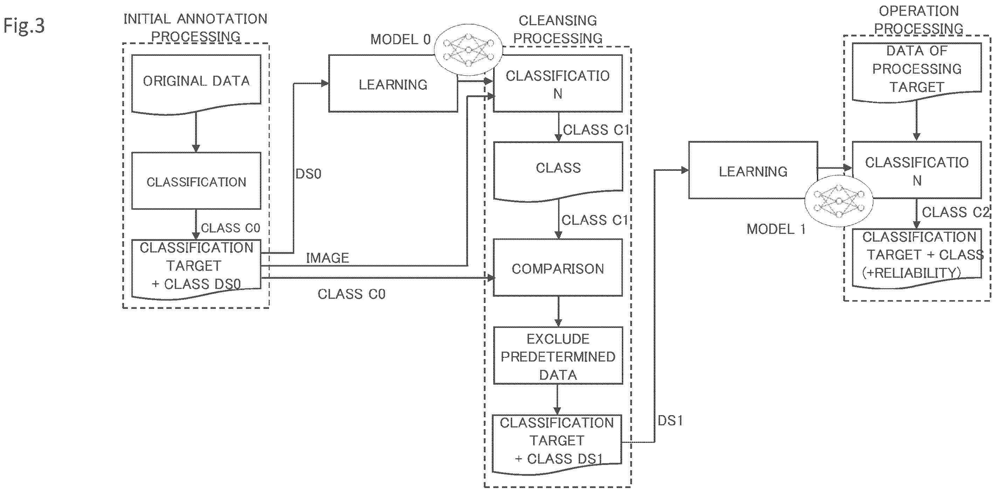

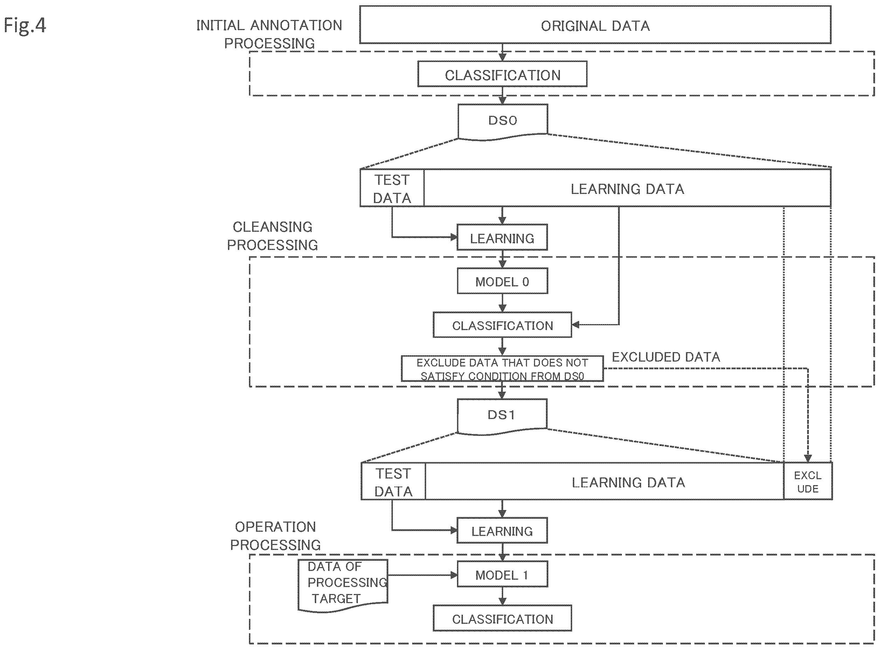

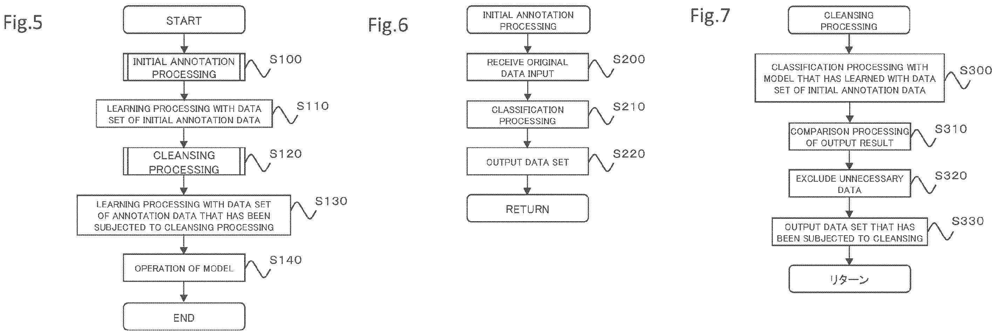

Next, an example of a processing process of the information processing system 1 of the present invention will be described with reference to conceptual diagrams of Figs. 3 and 4 and flowcharts of Figs. 5 to 7. Note that, in the following description, a case where the classification target data is image data and image classification processing is performed on the image data will be described.

First, the information processing system 1 of the present invention executes initial annotation data processing in order to learn a model used in deep learning (S100).

Specifically, an amount sufficient for use in learning, for example, ten or more pieces of image data (original data) per class are input to the information processing system 1, and the input is received by the original data input reception processing unit 201 of the initial annotation processing unit 20 (S200).

Then, the first classification processing unit 202 executes the image classification processing on the image data (classification target data) that is each piece of original data whose input has been received (S210), and outputs the class C0 to each piece of original data. The first data set output processing unit 203 associates the original data and the class C0 with each other for each piece of original data as initial annotation data, and outputs the data set DS0 of the set (S220).

As described above, the initial annotation processing unit 20 outputs the data set DS0 of the initial annotation data on the basis of the original data.

Then, the learning processing unit 21 classifies the data set DS0 of the initial annotation data into learning data used for learning processing and test data used for testing the model, and executes learning processing in deep learning to generate the model 0 (S110). Note that image data and a class for the image data are associated with each piece of annotation data classified into learning data or test data.

Using the model 0 generated in this manner, the cleansing processing unit 22 executes the cleansing processing on the initial annotation data in the data set DS0 (S120).

That is, the second classification processing unit 220 in the cleansing processing unit 22 inputs image data of learning data or image data of learning data and test data in the data set DS0 to the model 0 as an input value, executes image classification processing by deep learning (S300), and outputs the class C1 for the input data (learning data or learning data and test data). The classification processing unit preferably performs the processing on the learning data in the data set DS0 or all data of the learning data and the test data.

Then, the comparison processing unit 221 compares the class C0 corresponding to the image data (classification target data), which is the original data in the data set DS0, input to the second classification processing unit 220 with the class C1 of the output result of the second classification processing unit 220 for the image data (S310), and determines whether the class C0 and the class C1 match. Then, when the class C0 and the class C1 do not match, the annotation data is excluded from the data set DS0 (S320).

After the comparison processing in the comparison processing unit 221, the second data set output processing unit 222 outputs a set of annotation data not excluded as the data set DS1 (S330). Note that, at this time, image data of a face region that has not been excluded and annotation data of goods identification information (class C1) corresponding thereto may be specified, and this set may be output as the data set DS1.

When the class C0 by the classification processing in the first classification processing unit 202 and the class C1 by the classification processing in the second classification processing unit 220 match with each other, it is estimated that the accuracy of the annotation of the annotation data is high. On the other hand, in the case of mismatch, there is a possibility that there is an error in the annotation of the annotation data. Accordingly, it is possible to output the data set DS1 of highly accurate annotation data by excluding the annotation data of which the class does not match from the data set.

Then, the learning processing unit 21 executes learning processing in deep learning by using each annotation data of the data set DS1 which is output after being subjected to the cleansing processing by the cleansing processing unit 22, and generates a new model 1 (S130).

Using the model 1 generated as described above, the operation processing unit 23 executes operation processing of deep learning (S140). That is, image data (processing target data) to be actually processed is input to the model 1 as an input value, processing by deep learning is executed, and the class C2 for the image data input as an input value is output as an output value.

Note that, in the image classification processing of each of the first classification processing unit 202 and the second classification processing unit 220, in a case where the reliability of the class (how reliable the output class is) is output in addition to the class, a distribution may be executed according to a certain threshold. For example, the output result (reliable class) of which the reliability is equal to or greater than (larger than) the predetermined threshold may be determined as it is, and the recognition result may be indicated to the operator for the output result (unreliable class) of which the reliability is less than (less than or equal to) the predetermined threshold, and correction input of a correct class may be accepted or data itself may be excluded when the recognition result is wrong. Thus, it is also possible to automatically determine whether or not it is necessary to correct the annotation data to be manually corrected. For example, in a case where the output result of the first class and the output result of the second class are equal to or less than a predetermined value with respect to the class associated with the image data as the classification target data in the second classification processing unit 220, the recognition result may be indicated to the operator.

### [Second embodiment]

When the original data is image data, a plurality of objects may appear in the image data. For example, in a case where processing of identifying goods displayed on a display shelf is executed from image information obtained by capturing the display shelf, a plurality of goods is often captured. In such a case, it is preferable to execute processing of detecting an object from the original data and setting image data including the object as classification target data and processing target data. Hereinafter, description will be made.

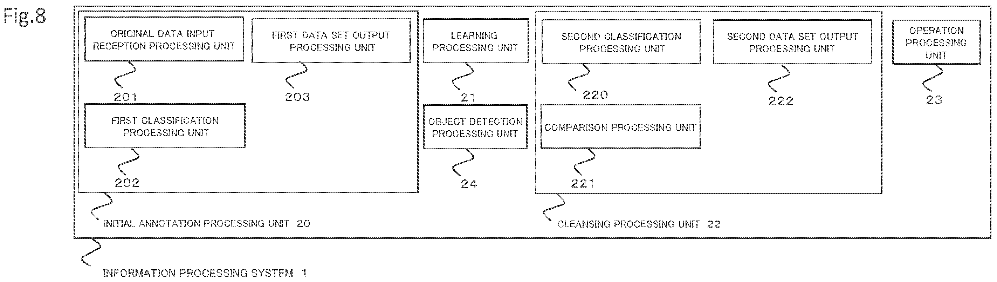

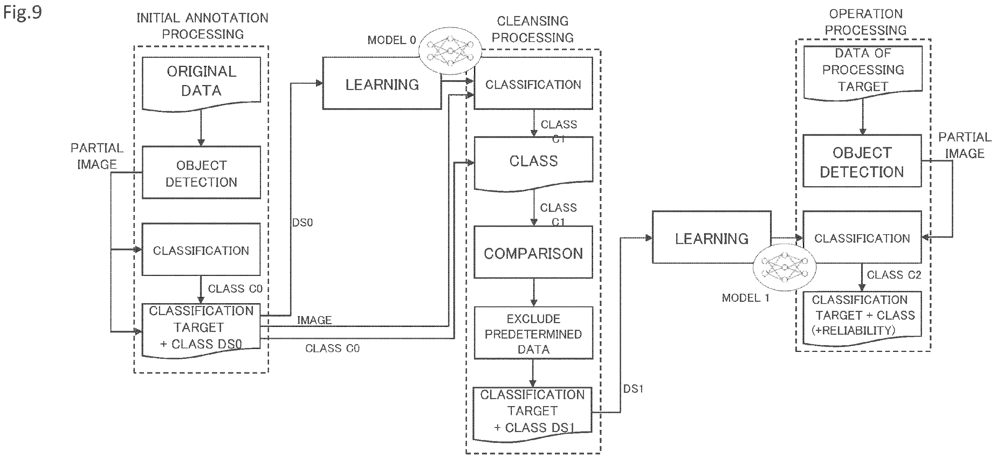

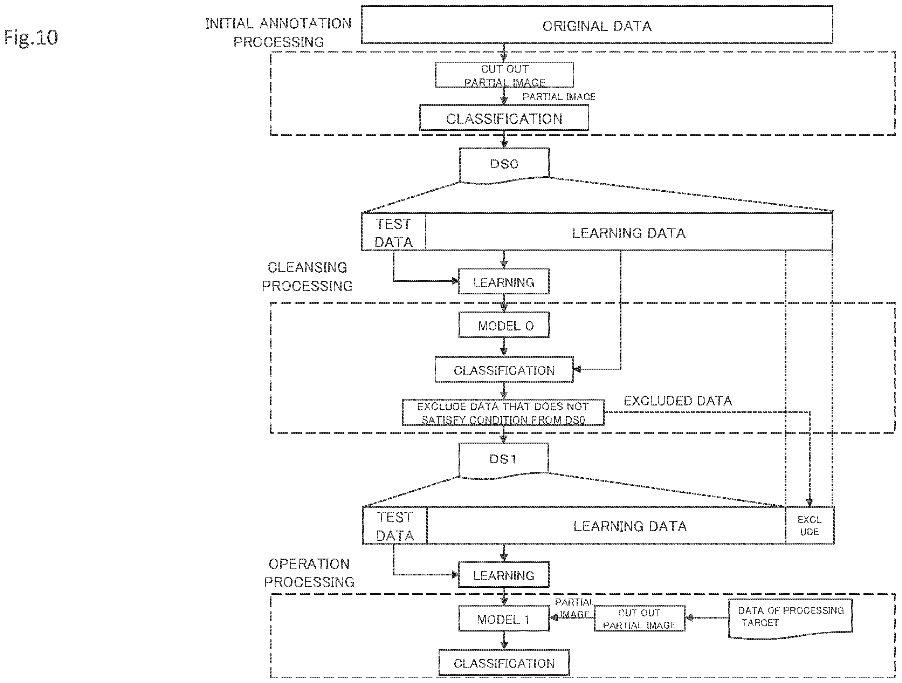

Fig. 8 schematically illustrates an example of an overall configuration of the information processing system 1 according to the present embodiment. The information processing system 1 according to the present embodiment further includes an object detection processing unit 24. Further, a conceptual diagram of an example of entire processing in the second embodiment is illustrated in Fig. 9, and a flow of data utilization is illustrated in a conceptual diagram of Fig. 10.

The object detection processing unit 24 detects an object from the image data and cuts out a region including the object. Cutting out a region including an object may actually separate or copy the region including the object from the image data to obtain another image data, or may designate the region including the object without separating or copying the region from the image data to enable processing to be executed on the region. In addition, the region may be cut out along the contour of the object, or may be cut out as a rectangular region including the object or a region having any shape including the contour of the object. Further, image data obtained by cutting out a region including an object is referred to as partial image data. As described above, the partial image data may be different image data obtained by actually separating or copying the region including the object from the image data, or may be data specifying the region including the object without separating or copying the region from the image data. In this case, the partial image data is the classification target data in the first embodiment, and is associated with the class in the annotation data.

Various known methods can be used for the object detection processing unit 24 to cut out an object, and for example, it may be cut out by pattern matching with a target object, or processing by deep learning using a model that detects an object from image data may be executed.

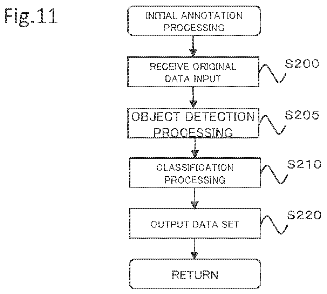

Next, an example of a processing process in the present embodiment will be described with reference to flowcharts of Figs. 5, 7, and 11.

First, the information processing system 1 of the present invention executes initial annotation data processing in order to learn a model used in deep learning (S100).

Specifically, an amount sufficient for use in learning, for example, ten or more pieces of image data (original data) per class are input to the information processing system 1, and the input is received by the original data input reception processing unit 201 of the initial annotation processing unit 20 (S200).

Then, the region of the object is detected from each piece of original data whose input has been received (S205), and partial image data (classification target data) obtained by cutting out the region of the object is cut out. In a case where a plurality of objects can be detected in the original data, a plurality of pieces of partial image data is cut out from the original data.

Then, the first classification processing unit 202 executes the image classification processing on each piece of partial image data (S210), and outputs the class C0 for the each piece of partial image data. The first data set output processing unit 203 outputs a data set DS0 of the set as initial annotation data by associating the partial image data with the class C0 for the each piece of partial image data (S220).

As described above, the initial annotation processing unit 20 outputs the data set DS0 of the initial annotation data on the basis of the partial image data (classification target data) in the original data.

Then, as in the first embodiment, the learning processing unit 21 classifies the data set DS0 of the initial annotation data into learning data used for learning processing and test data used for testing the model, and executes the learning processing in the deep learning to generate the model 0 (S110).

Using the model 0 generated in this manner, the cleansing processing unit 22 executes the cleansing processing on the initial annotation data in the data set DS0 (S120).

That is, the second classification processing unit 220 in the cleansing processing unit 22 inputs partial image data (classification target data) in the data set DS0, that is, learning data or learning data and test data to the model 0 as input values, executes image classification processing by deep learning (S300), and outputs the class C1 for the input partial image data (learning data or learning data and test data). The classification processing unit preferably performs the processing on the learning data that is partial image data (classification target data) in the data set DS0 or all data of the learning data and the test data, but may be performed on a part thereof.

Then, the comparison processing unit 221 compares the class C0 corresponding to the partial image data in the data set DS0 input to the second classification processing unit 220 with the class C1 of the output result of the second classification processing unit 220 for the partial image data (S310), and determines whether the class C0 and the class C1 match. Then, when the class C0 and the class C1 do not match, the annotation data is excluded from the data set DS0 (S320).

After the comparison processing in the comparison processing unit 221, the second data set output processing unit 222 outputs a set of annotation data not excluded as the data set DS1 (S330).

The learning processing unit 21 executes learning processing in deep learning by using each piece of annotation data of the data set DS1 which is output after being subjected to the cleansing processing by the cleansing processing unit 22, and generates a new model 1 (S130).

Using the model 1 generated as described above, the operation processing unit 23 executes operation processing of deep learning (S140). That is, the object detection processing unit 24 executes object detection processing on image data to be actually processed, detects a region of an object from the image data whose input has been received, and cuts out partial image data (processing target data) obtained by cutting out the region of the object. Then, the cut-out partial image data is input to the model 1 as an input value, processing by deep learning is executed, and the class C2 for the image data input as an input value is output as an output value.

### [Third embodiment]

Next, a case where the information processing system 1 of the present invention is used for processing of identifying goods from image data (captured image data) obtained by capturing a display shelf of a store will be described. In the present embodiment, goods displayed on a display shelf appearing in image data obtained by capturing the display shelf are subjected to processing by deep learning to identify goods identification information such as a product name and a predetermined code (such as a JAN code).

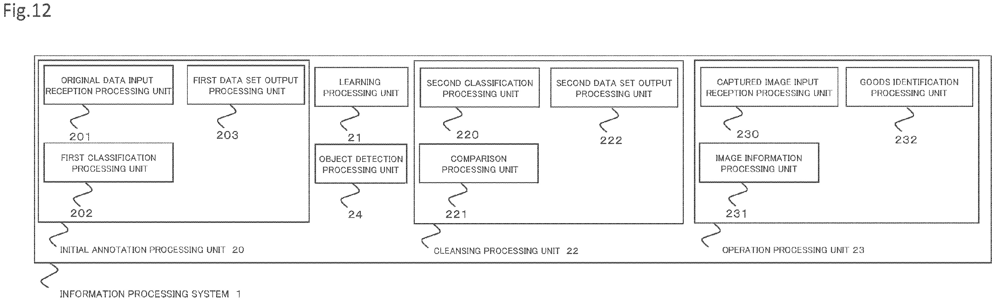

In the information processing system 1 according to the present embodiment, the operation processing unit 23 has a processing function for identifying goods from captured image data obtained by capturing the display shelf. The operation processing unit 23 includes a captured image input reception processing unit 230, an image data processing unit 231, and a goods identification processing unit 232. Fig. 12 illustrates a block diagram of a configuration of the information processing system 1 according to the present embodiment.

The captured image input reception processing unit 230 receives an input of captured image data as a processing target on which processing of identifying goods displayed on a display shelf is executed by using a model by deep learning.

The image data processing unit 231 executes correction processing, such as trapezoid correction processing and distortion correction processing, for the captured image data in a confronting state. Various known methods can be used for the correction processing in the image data processing unit 231.

In the goods identification processing unit 232, the object detection processing unit 24 inputs image data of a region (face region) in which goods are displayed that is cut out from the captured image data as an input value to the model 1 learned using the data set DS1 output by the cleansing processing unit 22, and outputs goods identification information appearing in the face region as a class to perform identification.

Next, processing of identifying goods from captured image data obtained by capturing a display shelf of a store using the information processing system 1 of the present invention will be described.

First, processing of generating a model (model 1) used in deep learning for identifying goods will be described.

In order to generate a model for identifying goods by deep learning, image data obtained by capturing the display shelf (captured image data for learning. The original data) is prepared in an amount sufficient for the learning processing of deep learning, for example, ten or more for each class, and input to the information processing system 1.

The original data input reception processing unit 201 of the initial annotation processing unit 20 receives an input with the captured image data for learning as the original data. Then, a region of goods displayed on the display shelf is detected from each piece of captured image data whose input has been received, and the region is cut out as image data (classification target data) of the face region.

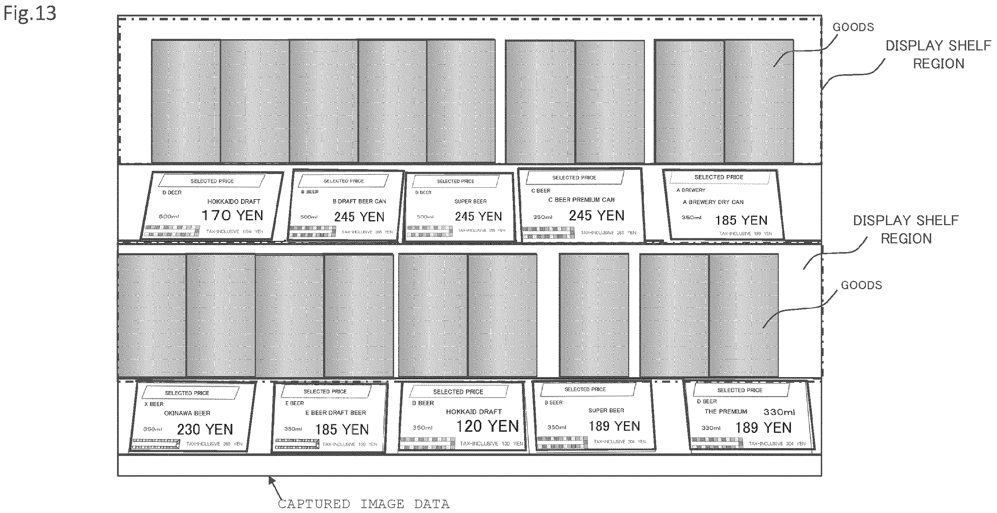

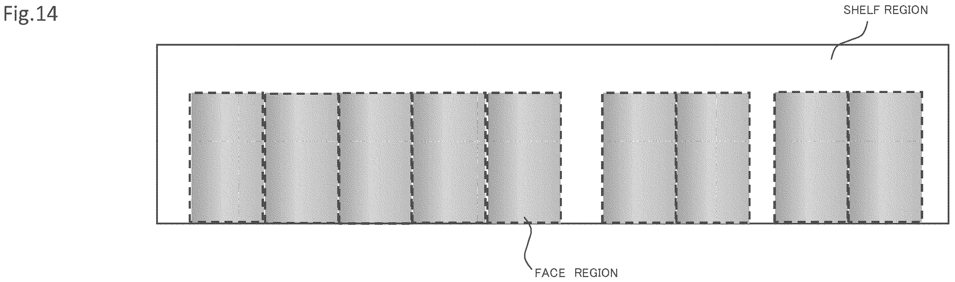

Specifically, it is assumed that the captured image data is Fig. 13. In the captured image data, a plurality of display shelves appears, and a plurality of goods is displayed on each display shelf. After known correction processing such as trapezoid correction processing and distortion correction processing in the image data processing unit 231 is executed on the captured image data obtained by capturing the display shelf, a region (display shelf region) of the display shelf in which the goods are displayed is specified by a known method. Then, the object detection processing unit 24 detects a region (face region) including goods from the display shelf region by a known method, and cuts out image data (classification target data) of the face region. Fig. 14 illustrates an example of a state in which the face region is specified and cut out in the region of each shelf specified from the captured image data of Fig. 13. The face region includes goods displayed on the display shelf. Note that the region of each shelf is specified, and the face region may be cut out from the shelf region, or the face region may be cut out from the captured image data.

The image data of the face region thus cut out is input to the first classification processing unit 202, and the image classification processing is executed to identify and output the goods identification information (class C0). As the image classification processing in the first classification processing unit 202, for example, image data serving as a sample for each of goods or data (sample data) of a local feature amount based on the image data is stored in advance, and the goods identification information is identified by comparing the input image data of the face region with the sample data. Alternatively, the goods identification information may be identified by deep learning or the like. The goods identification information (class C0) of the goods appearing in the image data of each face region can be identified by the image classification processing by the first classification processing unit 202. Then, the first data set output processing unit 203 sets the image data of the face region and the identified goods identification information (class C0) as annotation data in association with each other. Further, the data set DS0, which is a set of initial annotation data in which the image data of the face region and the goods identification information (class C0) of the identified goods are associated with each other, is output.

Through the above processing, the initial annotation processing unit 20 outputs the data set DS0.

Then, the learning processing unit 21 classifies the data into learning data used for the learning processing and test data used for testing the model in the data set DS0 of the initial annotation data, and executes the learning processing in the deep learning to generate the model 0.

Using the model 0 generated in this manner, the cleansing processing unit 22 executes the cleansing processing on the initial annotation data in the data set DS0.

That is, the second classification processing unit 220 in the cleansing processing unit 22 inputs image data (learning data or learning data and test data) of each face region in the data set DS0 to the model 0 as an input value, executes image classification processing by deep learning, and outputs goods identification information (class C1) for the image data of the face region.

Then, the comparison processing unit 221 compares the goods identification information (class C0) corresponding to the image data of the face region in the data set DS0 input to the second classification processing unit 220 with the goods identification information (class C1) of the output result of the second classification processing unit 220 for the image data, and determines whether the goods identification information is the same. Then, when the pieces of goods identification information are not the same, the image data of the face region and the annotation data of the goods identification information (class C0) corresponding thereto are excluded from the data set DS0.

After the comparison processing in the comparison processing unit 221, the second data set output processing unit 222 outputs the image data of the face region that is not excluded and the annotation data of the goods identification information (class C0) corresponding thereto as the data set DS1.

When the data set DS1 is output by the cleansing processing unit 22 as described above, the learning processing unit 21 executes learning processing in deep learning using each piece of annotation data of the data set DS1 and generates a new model 1.

By the above processing, the model 1 for identifying the goods can be generated.

Next, processing (operation processing) of identifying goods displayed on a display shelf of a store appearing in captured image data obtained by capturing the display shelf will be described.

First, when captured image data as a processing target is input to the information processing system 1, the input is received by the captured image input reception processing unit 230 of the operation processing unit 23. Then, the image data processing unit 231 executes correction processing on the image information from the captured image data whose input has been received, and the object detection processing unit 24 specifies the display shelf region with respect to the captured image data after the correction processing by a known method. Then, the object detection processing unit 24 cuts out image data of a face region including goods from the display shelf region by a known method. Note that the region of each shelf is specified, and the face region may be cut out from the shelf region, or the face region may be cut out from the captured image data.

The goods identification processing unit 232 inputs the image data of the face region cut out in this manner to the model 1 generated as described above as an input value, executes processing by deep learning, and outputs goods identification information (class C2) for the face region as an output value.

By executing the above processing, it is possible to accurately identify the goods identification information of the goods displayed on the display shelf appearing in the captured image data as a processing target.

### [Fourth embodiment]

Further, in the information processing system 1 of the present invention, the case of the identification processing of the goods displayed in the display shelf has been described in the third embodiment, but the present invention is not limited thereto. This can be widely applied to a case where image classification is performed from image data as a processing target by deep learning.

In the first to fourth embodiments described above, the case where the learning processing of deep learning and the operation processing are performed using image data as an example has been described, but it is not limited to the image data, and sound data or text data may be used. In this case, it is sufficient if similar processing is executed by replacing the description of "image" with "sound" and "text".

Further, in the case of processing for "image", "sound", "text", and the like, the description of "image data", "sound data", "text data", and the like does not have to be image data, sound data, or text data itself, but only needs to be data meaning an image, sound, or text, and includes, for example, data having some relevance such as data of a feature amount such as a local feature amount or data indicating a location of data.

### Industrial Applicability

By using the information processing system 1 of the present invention, annotation data in deep learning can be automatically cleansed by a simpler method.

### Reference Signs List

- 1: Information processing system
- 20: Initial annotation processing unit
- 21: Learning processing unit
- 22: Cleansing processing unit
- 23: Operation processing unit
- 24: Object detection processing unit
- 70: Arithmetic device
- 71: Storage device
- 72: Display device
- 73: Input device
- 74: Communication device
- 201: Original data input reception processing unit
- 202: First classification processing unit
- 203: First data set output processing unit
- 220: Second classification processing unit
- 221: Comparison processing unit
- 222: Second data set output processing unit
- 230: Captured image input reception processing unit
- 231: Image data processing unit
- 232: Goods identification processing unit

## Claims

1. An information processing system that executes cleansing processing of annotation data in a data set that is a set of annotation data including classification target data and a class corresponding to the classification target data, the information processing system comprising:
a learning processing unit that generates a model by executing learning processing of deep learning using the data set; and
a cleansing processing unit that executes cleansing processing of annotation data in the data set, wherein
the cleansing processing unit
executes the cleansing processing of first annotation data in a first data set by outputting a first class corresponding to classification target data in the first annotation data in the first data set and a second class by inputting the classification target data to a first model generated by the learning processing unit using the first data set, and comparing the first class with the second class.

2. The information processing system according to claim 1, wherein
the cleansing processing unit
outputs a first class corresponding to the classification target data in the first annotation data in the first data set and a second class by inputting the classification target data to a first model generated by the learning processing unit using the first data set,
excludes the first annotation data from the first data set when the first class and the second class are compared and a predetermined condition is not satisfied, and
outputs a second data set using annotation data that has not been excluded among the first annotation data in the first data set.

3. The information processing system according to claim 1, wherein
the learning processing unit
generates a second model using a data set of a set of annotation data on which the cleansing processing has been executed.

4. The information processing system according to claim 3, further comprising:
an operation processing unit that executes deep learning processing by inputting analysis target data as a processing target to the second model.

5. The information processing system according to claim 1, further comprising:
an initial annotation processing unit that executes predetermined classification processing on the classification target data, outputs the first class corresponding to the classification target data, and outputs the first data set that is a set of first annotation data in which the classification target data and the first class are associated with each other.

6. The information processing system according to claim 5, wherein
the classification processing in the initial annotation data processing unit and the classification processing in the cleansing processing unit are different classification processing.

7. The information processing system according to any one of claims 1 to 6, wherein
the classification target data is data obtained by cutting out a part of original data.

8. An information processing system that executes cleansing processing of annotation data in a data set that is a set of annotation data including image data of goods and goods identification information, the information processing system comprising:
a learning processing unit that generates a model by executing learning processing of deep learning using the data set; and
a cleansing processing unit that executes cleansing processing of annotation data in the data set, wherein
the cleansing processing unit
executes the cleansing processing of first annotation data in a first data set by outputting first goods identification information corresponding to image data of goods in the first annotation data in the first data set and second goods identification information by inputting the image data of the goods to a first model generated by the learning processing unit using the first data set, and comparing the first goods identification information with the second goods identification information, and
the learning processing unit
generates a second model by using a data set of a set of annotation data on which the cleansing processing has been executed.

9. The information processing system according to claim 8, further comprising:
an operation processing unit that executes deep learning processing by inputting image data of goods displayed on a display shelf from image data obtained by capturing the display shelf to the second model and identifies goods identification information of the goods.

10. An information processing program for causing a computer to function as:
a learning processing unit that executes learning processing of deep learning using a data set that is a set of annotation data including classification target data and a class corresponding to the classification target data to generate a model; and
a cleansing processing unit that executes cleansing processing of annotation data in the data set, wherein
the cleansing processing unit
executes the cleansing processing of first annotation data in a first data set by outputting a first class corresponding to classification target data in the first annotation data in the first data set and a second class by inputting the classification target data to a first model generated by the learning processing unit using the first data set, and comparing the first class with the second class.

11. An information processing program for causing a computer to function as:
a learning processing unit that executes learning processing of deep learning using a data set that is a set of annotation data including image data of goods and goods identification information to generate a model; and
a cleansing processing unit that executes cleansing processing of annotation data in the data set, wherein
the cleansing processing unit
executes the cleansing processing of first annotation data in a first data set by outputting first goods identification information corresponding to image data of goods in the first annotation data in the first data set and second goods identification information by inputting the image data of the goods to a first model generated by the learning processing unit using the first data set, and comparing the first goods identification information with the second goods identification information, and
the learning processing unit
generates a second model by using a data set of a set of annotation data on which the cleansing processing has been executed.
